# EUROPEAN PATENT SPECIFICATION

(11) **EP 1 613 945 B1**
(45) Date of publication and mention of the grant of the patent: **14.05.2008**
(21) Application number: 04757931.3
(22) Date of filing: 19.03.2004
(51) Int. Cl.: G01N 9/00

(54) **RESONATOR SENSOR ASSEMBLY**
RESONATOR-SENSOR-EINHEIT
ENSEMBLE DETECTEUR A RESONATEUR

(30) Priority: 21.03.2003 US 456517 P
(43) Date of publication of application: 11.01.2006
(73) Proprietor: Visyx Technologies Inc., Sunnyvale, CA 94085 (US); Hella KGaA Hueck & Co., 59552 Lippstadt (DE)
(72) Inventor: KOLOSOV, Oleg, San Jose, CA 95129 (US); MATSIEV, Leonid, San Jose, CA 94063 (US); VARNI, John, F., Los Gatos, CA 95032 (US); DALES, G., Cameron, Saratoga, CA 95070 (US); LUDTKE, Olaf, 27729 Vollersode-Wallhofen (DE); WULLNER, Dirk, 59555 Lippstadt (DE); BUHRDORF, Andreas, 28201 Bremen (DE); DOBRINSKI, Heiko, 28359 Bremen (DE)
(74) Representative: Feray, Valérie
(86) International application number: PCT/US2004/008552
(87) International publication number: WO 2004/086003

(56) References cited:
- US-A- 4 644 803
- US-A- 5 477 726
- US-A- 6 155 098
- US-A1- 2002 074 897
- US-A1- 2002 178 805
- US-A1- 2003 000 291
- US-B1- 6 182 499

## Description

### Claim of Priority

This application claims the benefit of U.S. Provisional Application No. 60/456,517 filed on March 21, 2003.

### Technical Field

The present invention relates generally to the assembly of sensing devices, and more particularly to the packaging of fluid condition sensors such as for the sensing of synthetic or natural petroleum fluids.

### Background

U.S. Provisional Application Serial No. 60/419,404, (entitled "Machine Fluid Sensor and Method"; filed October 18, 2002) discloses improved machine fluid sensors and methods. There is a need for the ability to package sensing devices so that they can withstand their operating conditions. Exemplary applications In which these sensors may be used in engines in general, automobiles, heavy machinery, military equipment, airplane parts, oil drilling, exploration and production well logging, oil refining, pipeline and quality control applications, marine transportation, sub-sea exploration and aerospace related equipment, or any other fluid containing application. In general, sensors for these applications will include very small components that need to be able to withstand harsh operating environment conditions. The ability to assemble such devices efficiently using automated materials handling equipment is also important.
US-A-4644803 relates to a fluid density measuring apparatus and a method for directly measuring fluid density or indirectly measuring force, acceleration, flow velocity, differential pressure and other parameters affecting the apparatus by use of a vibratory single ended tuning fork mounted in a housing. This document discloses a flexural resonator which has a surface exposed to a fluid whereby the flexural resonator is mounted to a platform whereby a spaced relationship is created between the exposed sensing surface and the platform so that the exposed sensing surface of the flexural resonator can displace fluid in contact therewith.
US 5,918,354 relates to a method of making a piezoelectric element and discloses all of the features of the preamble of claim 1 or 20.
US 2002/0074897 A1 relates to a microbeam oscillator. This document discloses a cantilever beam oscillator to which a protective layer in the process of manufacture of the resonator is applied at least temporarily to only an exposed sensing surface.

### Summary of the Invention

The present invention meets the above needs by providing an improved method according to claim 1.
A respective package according to claim 20 is also provided.

A highly preferred sensor of the present invention includes a resonator, and more preferably a tuning fork resonator.

Among other advantages, the present invention affords the ability to provide improved sensor assemblies for a number of different applications. The sensor assemblies of the present invention thus preferably include at least one and more preferably a combination of two or more of the following:
• operates for long periods of time (e.g., at least 3 months, and more preferably at least 1 year or longer) over a temperature range of -40°C to 170°C and more preferably -60°C to 300°C, without compromise to the material sensor performance characteristics;
• provides protection to fragile components that are typically small (e.g., smaller than 5 mm, and in some instances having a smallest dimension that is smaller than 1 mm), in harsh environments such as environments that include corrosive media, abrasive media, or combinations thereof;
• provides a packaged device that is compact (e.g., smaller than about 15 cm³, having a footprint of less than about 40 cm², and more preferably smaller than about 10 cm³, having a footprint of less than about 20 cm²), which can be used alone or combined with other components, such as an application specific integrated circuit (ASIC) onto a common platform (e.g., a lead frame or the like);
• includes individual or modular components that can be readily handled by automated materials handling equipment, such as components including a flat surface for handling by "pick and place" robots; or
• includes structure that permits for calibration of the sensor against a material having a known characteristic or for initializing the sensor upon introduction of a new fluid.

Accordingly, it can be seen that the present invention provides a solution for a number of competing technological challenges; notably, for example, the preparation of an assembly in which a sensor having a free portion with a sensing surface is incorporated onto a platform, components of the sensor are physically shielded from harsh operating conditions, the requisite space is maintained between the free portion of the sensor and the platform, and the sensing surface of the sensor remains exposed for sensing.

### Brief Description of the Drawings

FIG. 1 is a side section view of a sensor of the present invention taken from the assembly of FIG. 2;

FIG. 2 is a perspective view of the sensor of FIG. 2 depicting an illustrative housing configuration;

FIG. 3a-3b illustrate (with side sectional views) of a sensor of the present invention, shown coupled with another component and sharing a common platform, and also including an optional protective layer;

FIG. 4 is a top sectional view of an assembly in accordance with the present invention to illustrate the use of a removable barrier for temporary use while applying a protective layer to components of a sensor in accordance with the present invention;

FIGS. 5a-5d illustrate (with side sectional views) a sequence of steps employed for applying a protective layer to components of a sensor in accordance with the present invention, in which a consumable barrier is employed;

FIGS. 6a-6e illustrate (with side sectional views) a sequence of steps employed for assembling another sensor in accordance with the present invention;

FIG. 7 illustrates a side view of a sensor of the present invention attached directly to an ASIC device; and

FIG. 8a-8d illustrate (with side sectional views) a sequence of steps employed for assembling yet another sensor in accordance with the present invention.

### Detailed Description of the Preferred Embodiment

The present invention is predicated upon the discovery of methods for assembling a sensor that includes a sensing element that requires exposure over at least a portion of its outer surface to ambient conditions. More particularly, the present invention is predicated upon the discovery of methods for assembling a fluid sensor that includes a resonator sensing element that requires exposure over at least a portion of its outer surface to the fluid it is sensing.

One preferred method of the present invention generally includes the steps of:
providing a coated or uncoated sensor element having an exposed sensing surface;
attaching the sensor element to a platform so that the exposed sensing surface is spaced from the platform; and
applying a protective layer over the platform and sensor while maintaining an exposed sensing surface.

In a particularly preferred embodiment, which is illustrated herein by description of a tuning fork resonator as the sensing element, a coated or uncoated tuning fork resonator is provided and has tines that are free to resonate upon application of an input signal (e.g., a varying frequency input signal). The resonator is attached to a platform In a manner that maintains the tines spaced from the platform. A protective layer is applied over the resonator (other than over the tines) and the platform. It should be appreciated that even though the present invention is illustrated with reference to a tuning fork resonator (e.g., having two, three or more tines), the invention is not so limited. For example, the features herein may be employed with respect to any of a number of types of sensors, including for example, cantilevers, unimorphs, bi-morphs, membrane resonators, torsional resonators, or other mechanical resonators. The invention may also have suitable application with respect to thickness shear mode resonators, surface acoustic wave devices, pressure sensing devices, or ultrasonic transducers.

Examples of resonators and the manner of using them for sensing characteristics of a fluid are taught, for example, in U.S. Patent Nos. 6,336,353 and 6,182,499, hereby expressly incorporated by reference.

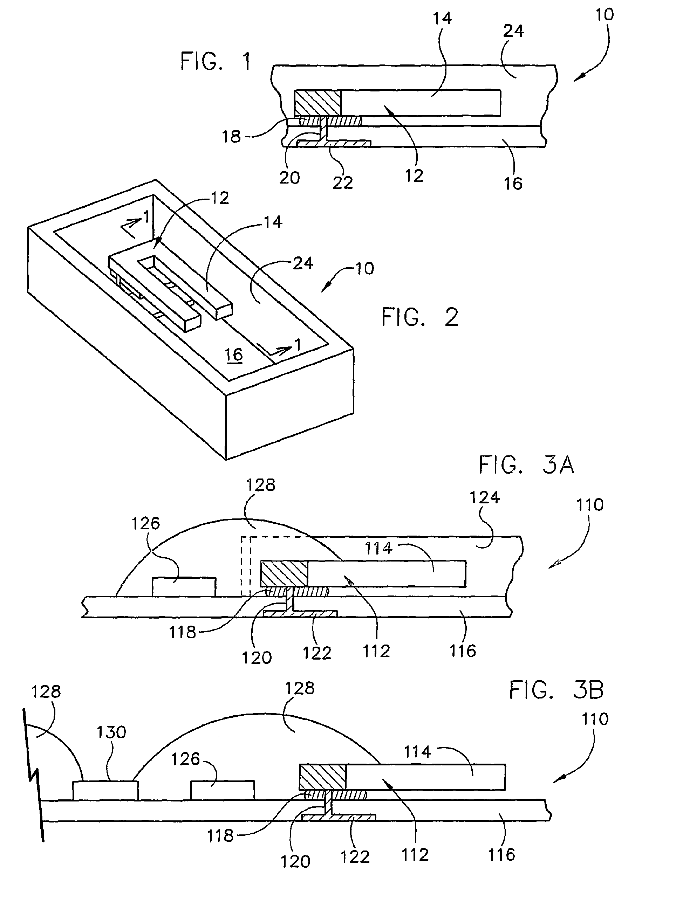

Fig. 1 illustrates one example of an approach to packaging a resonator to form an assembly 10 in accordance with the present invention. The assembly 10 includes a resonator 12 having a free portion 14. A base platform 16 supports the resonator, by way of a suitable support 18, which may be formed as part of the base platform 16, added as a separate layer (e.g., a layer of dielectric material (e.g., a polymer, a ceramic or combination thereof), an adhesive such as an epoxy, or the like) or otherwise provided so that the free portion is spaced from the base platform over at least a portion of the length of the resonator. The assembly is preferably provided with a suitable structure adapted for receiving a signal. For example, in one embodiment, a conductive path 20 joins a contact 22 with the resonator (e.g., via a bonded or soldered joint with an electrode (not shown) associated with the resonator.

The structure of the conductive path and the contact is not critical, and it is possible to combine the two into a single structure. For example, it is possible that the conductive path may include a wire that is attached to an electrode of the resonator. Alternatively, using techniques common in the manufacture of semiconductor devices, a via may be formed in the base platform 16 and filled with a wire or conductive metal. The contact may be a wire. It may also be a conductive trace applied by a suitable metallization process (e.g., plating, physical vapor deposition, chemical vapor deposition, plasma deposition, coating, spraying, or the like). It may also be possible to laminate with or without an adhesive.

Though FIG. 1 depicts a structure by which the conductive path extends through a base, it will be appreciated that the invention is not so limited, and the path can extend through or around any wall, e.g., wall 24 of the assembly. The wall may be any suitable material, and preferably is a material similar in electrical characteristics to the material of the base platform 16 (e.g., a ceramic, a polymer or a combination thereof).

In FIG. 2, there is shown an example of a more complete housing structure in which the assembly 10 includes a plurality of walls 24 that substantially surround the resonator. Though shown as generally orthogonally disposed continuous, flat walls, of course, the invention is not so limiting, the walls can assume any shape as desired. They may include discontinuities, e.g., grooves, wells, apertures, slits, windows or some other surface irregularity. The walls may be curved, be configured as a polygon other than a rectangle, or combinations thereof. In a preferred embodiment, there is a cut-out defined in the housing structure so that at least the free end 14 of the resonator 12 is exposed. For example, as seen in FIG. 2, a top wall may be omitted from covering all or a portion of an upper portion of the housing structure to render at least a portion of the resonator exposed to ambient.

An assembly including a resonator, such as the assembly in FIG. 1 is combined with one or more other devices, and is carried together by a common platform. It is contemplated that a resonator assembly is packaged in combination with an ASIC and be carried by a common platform. With reference to FIG. 3a, there is shown one such example in which an assembly 110, including a resonator 112 having a free portion 114. A base platform 116 having a conductive path (which in this illustration is shown connected with a contact 122, but need not be, as described above) forms a surface upon which a support 118 may be disposed for the resonator 112. A wall 124 substantially surrounds the resonator 112, while at least partially exposing at least a portion of the resonator to ambient.

Also shown in FIG. 3a is an additional electronic component 126 (an ASIC). Shown in FIG. 3b is an additional electronic component 126 (an ASIC) and a secondary component 130 (e.g. a temperature sensor). Furthermore, the one or more devices on the platform may or may not be surrounded by a wall, which is shown in FIG. 3a, but absent from FIG. 3b.

Secondary components may be included on the common platform with the resonator. Besides temperature sensors (e.g. thermistors, RTDs, semiconductor bandgap or the like), other sensors may be utilized. Beside ASICs, other more general integrated circuits may be used. Also, integrated circuits that combine the functionality several devices or sensors may be used; for example, an integrated circuit that measures temperature as well operates the resonator may be suitable. A variety of passive and/or active components may be used to assist in the operation of the integrated circuit and/or resonator. For example, resistors (e.g. thin film resistors) and capacitors (e.g. ceramic capacitors) may be utilized as passive components. Examples of active components include amplifiers and/or filters. Also suitable for a use as a secondary component is a field programmable gate array. The conductive path may also be considered another device that may be included on the common platform with the resonator. In addition, a calibration unit may be utilized. Of course, various combinations of these other devices may also be used on a common platform with the resonator.

In a preferred embodiment, the electrical connection between the resonator and the integrated circuit as short as possible to help lessen signal distortions, interferences and parasitic effect that may affect measurement accuracy.

In both FIGS. 3a and 3b, there is also shown a protective layer 128 that is applied to encapsulate at least a portion of the assembly. It will be appreciated that a similar protective layer may be employed over the various other alternative assemblies of the present invention as well, such as over the assembly 10 of FIG. 1. It is not only limited to the assembly 110 of FIGS. 3a and 3b.

The protective layer 128 may be any suitable protective layer. For example, it may be a coating that is sprayed, brushed or otherwise applied over the assembly; it may also include an overmolded plastic layer, a layer that is laminated, or combinations of two or more of coatings, overmolded layers, or laminated layers may also be employed.

It is found that there is a need to selectively apply the protective layer to the assembly so that components needing protection from harsh environments will be coated, while still keeping the free portion of the resonator exposed. Also, the protective layer may be selectively applied to the one or more components on the assembly. For example, the protective layer may be selectively applied to the temperature sensor (item 130 in FIG. 3b) so that a portion of the temperature sensor remains exposed to ambient, while the protective layer fully coats the additional electronic component. In the alternative, the protective layer may fully coat the temperature sensor if it has a thermal conductivity.

In order to accomplish this, any of a number of suitable selective application techniques may be employed, such as the employment of a removable protective barrier to prevent protective layer materials from contacting the free portion of the resonator. The removable protective barrier is thus positioned over the assembly to block the portions of the assembly requiring the protective layer from the portions that do not require the layer. The protective layer is then applied and the barrier is removed.

The protective barrier may take any suitable configuration, but preferably is selected from a re-usable barrier or a consumable barrier. For example, it might be possible to employ a photoresist over a portion of the assembly, selectively remove portions thereof, apply the protective material and then remove remaining photoresist.

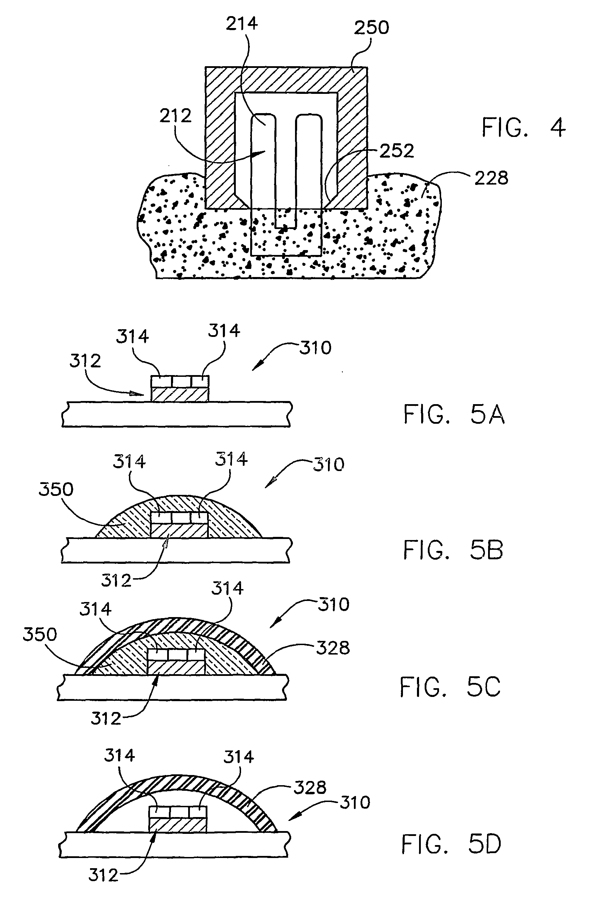

FIG. 4 is a top sectional view of a resonator assembly 210 in which a re-usable barrier 250 is employed to surround a resonator 212 over a free portion 214, while a protective layer 228 is applied. The re-usable barrier may be any suitable material. However, preferably it is a relatively soft material that will not plastically deform the resonator if it contacts the resonator. It may include one or more knife edges 252, membranes, walls or the like at any suitable location (e.g., a knife edge seal along an inner periphery) to help sealingly surround the resonator during application of the protective layer. It should be appreciated that though the barrier of this embodiment may be re-usable, it need not be, particularly if to do so would compromise the quality of the resulting assembly. The re-usable barrier may be manually handled, or handled by an automated instrument for placement purposes. In a variation within this embodiment, one or a plurality of the barriers may be placed on a robot arm, which precisely brings the barrier (or barriers) into proper position relative to the resonator.

FIGS. 5a-5d illustrate a sequence of steps that may be employed, pursuant to which the removable protective barrier is a consumable barrier. In FIG. 5a there is shown an assembly 310, that includes a resonator 312 having tines defining a free portion 214. The resonator sits on a platform 318. In FIG. 5b, a consumable barrier layer 350 is applied over the resonator of the assembly of FIG. 5a. In the step depicted in FIG. 5c, a protective layer 328 is applied over the consumable barrier layer 350. In FIG. 5d, the consumable layer has been removed. Leaving the protective layer 328 in spaced relation from the resonator 312.

In yet another embodiment it may be possible to employ a hybrid approach to the approach of FIGS. 4 and 5a-5d. For example, a shell may be formed in situ to surround the resonator. Upon conclusion of application of the protective layer, the shell may be removed, such as by breaking it at a weakened region (e.g., a scored location).

It is preferable that any consumable barrier material that is used be relatively inert to the material of the resonator and any associated hardware so that no damage arises as a result of the method. In this regard, any of a number of different materials may be employed as the consumable layer. For example, the material of the consumable barrier may be a material that can be dissolved, decomposed or otherwise broken down into particles for removal from the volume of space between the resonator and any resulting protective layer. Thus, the consumable barrier material may be selected from polymers (synthetic, biological, thermoplastic, thermoset, or combinations thereof), starches, waxes, salts or other dissolvable crystals, low melting point metals, or another sacrificial material that is capable of withstanding in its solid state the processing conditions for applying the protective layer, and thereafter being removable from the assembly without physically deforming or otherwise contaminating the resonator.

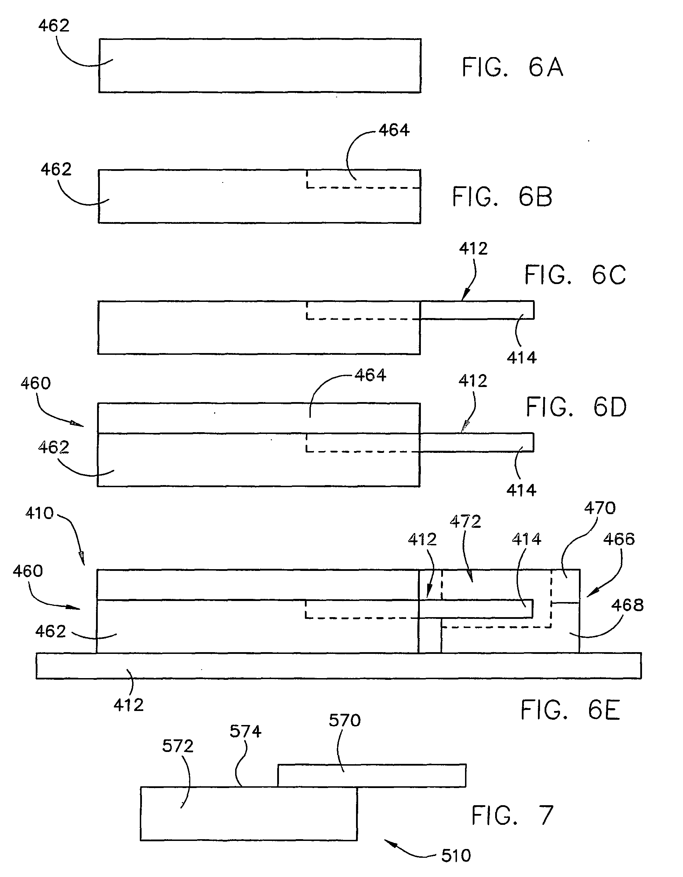

Turning now to the embodiment shown in FIGS. 6a-6e, there is shown another approach to the fabrication of an assembly 410 in accordance with the present invention. In the resulting assembly of this embodiment, a resonator 412 has a free portion 414 that extends away from a multi-layer holder 460. A first layer 462 is provided as shown in FIG. 6a. A trench 464 is formed in or on the first layer, as seen in FIG. 6b, using any suitable material removal or material build-up technique (e.g., etching, machining or the like for removal, or plating, physical vapor deposition, chemical vapor deposition, plasma deposition, coating, spraying, laminating with or without adhesive or the like, for build-up of spaced walls (not shown) for defining a trench).

According to FIG. 6c, the resonator 412 is placed in the trench so that the free portion projects away from the first layer 462. Though it may be possible to mechanically fasten the resonator into the trench, or to adhesively bond it in place, FIG. 6d illustrates the placement of a second layer 464 over at least a portion of the first layer 462. The second layer may be fabricated on the first layer using any suitable technique such as attaching a preformed layer, such as by laminating with or without an adhesive, plating, physical vapor deposition, chemical vapor deposition, plasma deposition, coating, spraying, or the like. At this point the multi-layer holder 460 is complete and may be implemented into a further assembly. In FIG. 6e, there is shown one illustration of how the holder 460 may be incorporated into a further assembly, such as by attachment (e.g., via welding, adhesive bonding, wire bonding or the like). In the embodiment of FIG. 6e, a shield device 466 is fabricated to include a protective shield for the free portion of the resonator, while still maintaining the free portion 414 exposed for sensing. Thus, a lower portion 468 is assembled with an upper portion 470 about the resonator 412. Either or both of the lower portion 468 or the upper portion 470 may include a window that exposes the free end for sensing. The lower portion 468, the upper portion 470 or both may be pre-fabricated to include a suitable cavity 472 for receiving the resonator. The lower portion 468 and the upper portion 470 might also be fabricated separately, or as a single unit (e.g., as a molded plastic clam-shell type package). Though shown in FIG. 6e as being carried by a common platform 412, the holder 460 and shield device 466 may be maintained upon separate support surfaces.

FIG. 7 illustrates a side view of an assembly 510 in which a sensor 570 including a resonator is attached directly to another device, particularly an ASIC device 572. Though shown mounted on an outer surface 574 of the ASIC device 572, the sensor may penetrate through such an outer surface to an interior of the ASIC device. Attachment of the sensor to the ASIC device may be by any suitable technique, such as (without limitation) via welding, adhesive bonding, wire bonding or the like. The sensor 570 may simply include a resonator, or it may also be an assembly that includes additional packaging, such as that depicted in the various other embodiments as shown herein (e.g., as in FIGS. 1-6d and 8a-8d).

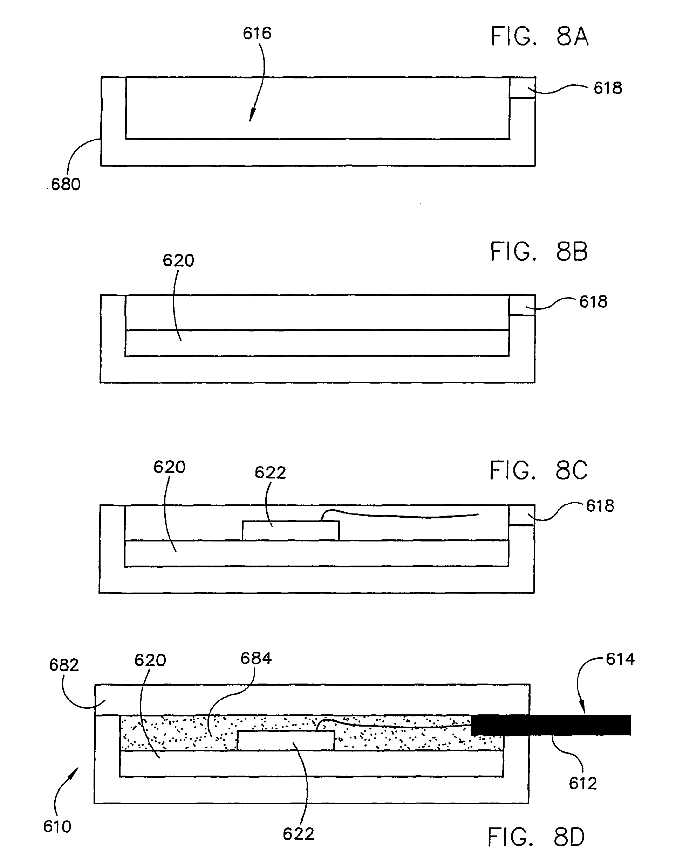

Turning now to FIGS. 8a-8d, there is shown yet another embodiment of the present invention in which an assembly 610 includes a first portion 680 and a second portion 682 that are attached together in a later-stage assembly step to enclose the assembly while leave a free portion 614 of resonator 612 exposed for sensing. It should be realized that a suitable shield device, such as shown in FIG. 6e may likewise be employed with the present assembly 612. As seen in FIG. 8a, preferably at least one (or both) of the first or second portions will be configured to include a well 616 for receiving components. Optionally, it may also have a suitable wall structure for defining a opening 618, through or on which the resonator 612 may be placed.

In FIG. 8b a first internal component 620 is placed in the well 616. In the step shown in FIG. 8c, a second internal component 622 (which may be pre-attached to or otherwise integrated into the first component, or omitted altogether) is placed in the well 616. Optionally, an electrical conductor 624 (e.g., wires, traces or otherwise) is attached to either or both of the first or second internal components. Pursuant to FIG. 8d, the resonator is connected with the electrical conductor, the second portion 682 is secured to the first portion (e.g., mechanically, by welding, by adhesive bonding or otherwise), and the well is optionally filled with an inert substance 684 (e.g., a gas, a gel, a liquid or otherwise).

Thereafter, the resulting assembly can be further handled (e.g., for placement on a common platform with an ASIC, for placement on an ASIC (as in FIG. 7) or otherwise), such as for attachment to a platform or to hardware for securing it in place in the Intended sensing environment. It should be recognized that the first component is an ASIC component.

As discussed in the above, in certain embodiments of the present invention it is preferable that a spacing be maintained between the free portion of any resonator and any adjacent structure. The amount of such spacing is not critical, and may vary depending upon the nature of the particular application. However, in the context of a preferred embodiment employing a tuning fork resonator, in order to help avoid the potential for electrical interference with the operation of the resonator, it is preferred that the spacing be at least one width of a tine of the tuning fork.

In any of the embodiments discussed herein, it is also possible that one or more additional structures are added to the assembly in order to help improve performance or functionality of the resulting device. For example, in one embodiment, the assembly includes a well or other suitable passage that is in direct fluid communication with the resonator and into which a calibration fluid can be introduced for the purpose of calibrating the sensor. It is also contemplated that the assembly may Include a structure that substantially envelops the resonator for assisting to preserve electrical characteristics. For example, a wire mesh or other like cover may be provided about the resonator as a Faraday cage. Other alternative structures may also be employed, such as the metallization of a region that at least partially surrounds the resonator.

It should be appreciated that the functions that are described herein may be performed as part of a single integrated package, or they may be spread over a plurality of different components that may or may not be supported by a common platform.

Further, the present Invention also contemplates the incorporation of one or more additional sensors apart from the resonator sensors described herein. For example, one embodiment contemplates the inclusion in an assembly of a sensor or other device for monitoring temperature, such as a thermistor, an RTD or other such temperature sensor (FIG. 3b). In this manner, it is contemplated that all of the data necessary for a calculation of viscosity, for example, can be obtained In a single assembly, which in turn can be interfaced with a suitable microprocessor.

It should be recognized that the present invention contemplates not only the methods employed for fabricating the assemblies of the present invention, but also the assemblies themselves, independent of the methods employed for fabrication. Thus the present invention contemplates sensor assemblies that include a resonator having a free portion with a sensing surface is incorporated onto a platform, wherein components of the sensor are physically shielded from harsh operating conditions, a spacing is maintained between the free portion of the resonator and the platform, and the sensing surface of the resonator is exposed for sensing.

The assemblies of the present invention may also be provided with suitable hardware for securing the assembly to another component, such as hardware for securing the assembly in an automotive vehicle engine or within a conduit, tank, or other structure for carrying a fluid.

It should also be recognized that even if not described in connection with one of the above embodiments, it is possible to combine steps from one of the embodiments shown with the other embodiments shown. For example, for each of the embodiments, it is contemplated that a protective layer is applied over at least a portion of the resulting assemblies. This can be done by overmolding, coating or other art-disclosed techniques for protecting delicate hardware from the effects of intended operating conditions. Additionally, even if not shown, each of the embodiments might be further assembled onto a platform alone or with other components using art-disclosed attachment techniques (e.g., via welding, adhesive bonding, wire bonding or the like).

It should also be recognized that single layers shown herein may be split into additional layers to form more than the number of layers shown, or combined with other layers to form less than the number of layers shown. All such variations are contemplated within the scope of the present invention.

Further, the disclosure herein of a particular shape or orientation of a component is not intended as limiting. Though it is expected that many embodiments will employ relatively thin and flat structures, the components may also be fabricated or arranged so that the resulting structure has a curvature, a relatively thick profile, or a combination thereof (e.g., an assembly including a resonator and protective carrier structure that has a ratio of its largest to its smallest dimension of about 1:1 to about 4:1).

Finally, the omission herein in any particular embodiment of any discussion of electrical connections or other hardware for signally connecting the assemblies herein with other electronic components is not intended as limiting. It should be recognized that a variety of art-disclosed hardware configurations may be employed in each instance, such as the use of wires, traces, conductive metal filled vias, combinations thereof or the like.

As discussed above, the sensor may be a mechanical resonator, such as is disclosed for example in commonly owned, co-pending application entitled "Mechanical Resonators" (claiming benefit of U.S. provisional application no. 60/456,292). The mechanical resonator has a resonator portion for resonating in a fluid and an electrical connection between the resonator portion and a source of a signal input. The resonator portion, the electrical connection or both include a base material and a performance-tuning material. The base material may include quartz, lithium niobate, zinc oxide, lead zirconate titanate (PZT), gallo-germanates (e.g., Langasite (La₃Ga₅SiO₁₄), Langanite, or Langatate), diomignite (lithium tetraborate), bismuth germanium oxide gallium phosphate, gallium nitride, aluminum nitride or combinations thereof. The performance-tuning material may include polymers, ceramics, metals, metal carbides or nitrides, diamond, diamond-like carbon, and combinations thereof.

The mechanical resonator may be connected to a measuring system that sends a variable frequency input signal, such as a sinusoidal wave, that sweeps over a predetermined frequency range, preferably less than about 100 kHz (e.g., in the 25-30 kHz range) for a tuning fork resonator and in a higher range for the TSM resonator. The resonator response over the frequency range is then monitored to determine selected physical and electrical properties of the fluid. Absolute values may be obtained if desired, as may relative, comparative or index values. Additionally, it is possible also that the system may be employed with determining whether a certain threshold criteria is met in the fluid being analyzed.

The hardware for the present measuring system may be any suitable hardware. It may include, for example, art-disclosed network analyzers, see, e.g., U.S. Patent Nos. 6,336,353 (Matsiev, et al.)("Method And Apparatus For Characterizing Materials By Using A Mechanical Resonator"); and 6,182,499 (McFarland, et al.) and published U.S. Patent Application No. 20030000291. The hardware might also be part of an application specific integrated circuit (ASIC), such as is disclosed for example in commonly owned, co-pending application entitled "Integrated Measurement Assembly For A Machine Fluid Sensing System" (U.S. patent no. 7,043,969), as disclosed in commonly owned, co-pending application entitled "Application Specific Integrated Circuitry For Controlling Analysis Of A Fluid" claiming benefit of U.S. provisional application no. 60/419,404), as disclosed in co-owned, co-pending application entitled "Resonator Sensor Assembly" (claiming benefit of U.S. provisional 60/456,517), as disclosed in co-owned, co-pending application entitled "Environmental Control System Fluid Sensing System And Method" (International patent application no. US03/32983) or as disclosed in co-owned, co-pending application entitled "Mechanical Resonators" (claiming benefit of U.S. provisional application no. 60/452,292).

Generally, the hardware for measuring system provides a versatile fluid sensing system. More specifically, the hardware provides a fluid sensing system for machines that rely upon the presence, condition or both of a fluid to maintain efficient operation, such as (without limitation) a synthetic or natural engine oil. In an automotive application, the user is provided with the ability to determine the actual condition (e.g. or the relative deviation of the state of the engine oil from its initial or virgin state) of the engine oil at any particular time, including during operation. Alternatively, in conjunction with assessing fluid condition, the hardware may also determine the amount of fluid remaining in a reserve of an assembly. This advantageously allows machine operators to extend the duration between fluid service events, while helping to assure continued operational integrity of a machine.

Any dynamic assembly that depends on fluids to operate (e.g., where friction and heat are of a concern), will benefit from hardware capable sensing the state of a fluid. For instance, the ability to dynamically monitor fluid condition, process data obtained from the monitoring, and report characteristics of the fluid to an interface or operator can have many applications. Assemblies that may benefit from the defined embodiments of the present invention are many, and can include without limitation, engines in general, automobiles, heavy machinery, military equipment, airplane parts, oil drilling, exploration and production well logging, oil refining, pipeline and quality control applications, marine transportation, sub-sea exploration and aerospace related equipment, or any other fluid containing application. In addition, contemplated methods include a step of assembling the hardware into a device that is incorporated into engines in general, automobiles, heavy machinery, military equipment, airplanes, oil drilling, exploration and production well logging equipment, oil refining, pipeline and quality control equipment, marine transportation equipment, sub-sea exploration and aerospace related equipment, or any other equipment that utilizes fluids for operations.

In the automotive field, numerous components require lubrication, which is not limited to engine oil. For example, other automotive components may include the transmission, the transfer case, the differential, etc. Still further, the sensing system may further be used to determined the quality and amount of other fluids which are not necessarily used predominantly as a lubricant, including: brake fluids, steering fluids, antifreeze fluids, refrigerant fluids, windshield washer fluids, or any other fluid located in an automotive system.

In one embodiment of suitable hardware, an oil sensing system is used to determine the component characteristics and amount of engine oil. In an automotive application, the oil sensing system will provide a user, at a minimum, with a warning as to the need to change the oil (such as owing to the presence of contaminants, a breakdown or loss of useful ingredients or otherwise). In such an application, the warning is essentially informing the user of the automobile that the engine oil has reaches a quality level or condition that is lower than that recommend by the automobile's manufacturer (or set by the oil manufacturer).

The fluid sensing system preferably uses a mechanical resonator as the fluid sensor in accordance with the present invention. The mechanical resonator is at least partially contained in the fluid under-test. To monitor the condition of the fluid under-test (i.e., engine oil), the mechanical resonator is provided with electrical energy through a frequency generator. The frequency generator is designed to apply a frequency signal (to the mechanical resonator) that is swept over a predetermined frequency range. Electronics are then used to detect the response signal from the mechanical resonator and process the signal to ascertain characteristics of the fluid under-test. The electronics are provided in the form of an application specific integrated circuit (ASIC). In addition, the hardware might also be part of or include a field programmable gate array (FPGA).

In the foregoing description, numerous specific details are set forth in order to provide a thorough understanding of the fluid sensing system, hardware and mechanical resonator that may be used with the present invention. It will be apparent, however, to one skilled in the art that the present invention may be practiced without some or all of these specific details. In other instances, well known process steps have not been described in detail in order not to unnecessarily obscure the present invention.

The manner of operating the resonators and sensors of the present invention may vary. In one embodiment, the sensor is operated continuously. In another, it may be intermittently operated. It is possible that the sensor may be operated only in preselected conditions, such as prior to starting vehicle operation, upon starting vehicle operation, during vehicle operation upon concluding vehicle operation, while the vehicle travels at a substantially constant velocity, while the vehicle accelerates or decelerates, or otherwise.

It should be understood that various alternatives to the embodiments of the invention described herein may be employed in practicing the invention. It is intended that the following claims define the scope of the invention and that the methods and apparatus within the scope of these claims and their equivalents be covered thereby.

## Claims

1. A method of packaging a sensor comprising a flexural resonator, the method comprising:
affixing a flexural resonator (112), having an exposed sensing surface (114), to a platform (116), wherein a spaced relationship is created between the exposed sensing surface (114) and the platform (116) so that the exposed sensing surface (114) of the flexural resonator (112) can displace a fluid in contact therewith;
**characterized by**
affixing an application specific integrated circuit, ASIC (126), to the platform (116), providing electrical communication between ASIC (126) and the flexural resonator (112) for providing stimulus to the flexural resonator (112) and for receiving a response signal from the flexural resonator (112);
applying a protective layer (128) to encapsulate a portion of the assembly so that components needing protection from harsh environments will be coated, covering the platform (116) and the flexural resonator (112) while maintaining a free portion of the resonator exposed to the ambient such that the exposed sensing surface (114) can displace the fluid in contact therewith;
affixing a secondary component (130) positioned independently from the ASIC (126) on the platform (116), the secondary component (130) being selected from a temperature sensor, a field programmable gate array, a calibration unit, a conductive path, a resistor, a capacitor, an amplifier, a filter, and combinations of two or more thereof, and optionally providing electrical communication between the ASIC (126) and the secondary component (130).

2. The method of claim 1, wherein the flexural resonator (112) is a tuning fork.

3. The method of claim 1 or 2, wherein the protective layer (128) is selectively applied by spraying, brushing, over molding, laminating or by combinations thereof.

4. The method according to any of claims 1 - 3, further including blocking the exposed sensing surface (114) with a removable protective barrier (350) prior to applying the protective layer (128).

5. The method according to any of claims 1 - 4, wherein the removable protective barrier (350) is a reusable or consumable barrier.

6. The method according to claim 5, wherein the removable protective barrier (350) is a consumable barrier that comprises a polymer, starch, wax, salt or other dissolvable crystal, low melting point metal, a photo resist, or another sacrificial material.

7. The method according to claim 5 wherein the removable protective barrier (350) is a reusable barrier that comprises a relatively soft material that will not plastically deform the flexural resonator if it contacts the flexural resonator.

8. The method according to any of claims 1-7, further including at least partially protecting the flexural resonator (112) from the ambient or operational conditions through the use of a housing.

9. The method according to any of claims 1 - 8, further comprising operating the flexural resonator (112) at temperatures between about -60° C and about 300° C.

10. The method according to any of claims 1 - 8, further comprising operating the flexural resonator (112) at temperatures between about -40° C and about 170° C.

11. The method according to any of claims 1-10, wherein the flexural resonator (112) affixed to the platform (116) has a length or width smaller than about 5 mm.

12. The method according to any of claims1 - 10, wherein the flexural resonator (112) affixed to the platform (116) has a length or width smaller than about 1 mm.

13. The method according to any of claims 1 - 12, wherein the package has a volume of about less than about 15 cm³.

14. The method according to any of claims 1 - 12, wherein the package has a volume of about less than about 10 cm³.

15. The method according to any of claims 1 - 14, wherein the package has a footprint of about less than about 40 cm².

16. The method according to any of claims 1-14, wherein the package has a footprint of about less than about 20 cm².

17. The method according to any of claims 1 - 16, further comprising at least partially preserving electrical characteristics of the flexural resonator (112) through the use of a Faraday cage.

18. The method according to any of claim 1 - 17, further comprising placing the package in an engine, a transmission, a transfer case, a differential, a brake system, a steering system, an antifreeze system, a heating and cooling system, a washer system, or combinations thereof.

19. The method according to any of claims 1-18, further comprising placing the package in a lubricant, a brake fluid, a steering fluid, an antifreeze fluid, a refrigerant fluid, a washer fluid, or combinations thereof.

20. A package for protecting a sensor comprising a flexural resonator (112), the package comprising:
a flexural resonator (112) on a platform (116), the flexural resonator (112) having one or more exposed sensing surfaces (114) in spaced relationship to the platform (116) so that the exposed sensing surface (114) can displace a fluid in contact therewith to determine one or more characteristics of the fluid,
**characterized by**
an application specific integrated circuit, ASIC (126), on the platform (116), the ASIC (126) being in electrical communication with the flexural resonator (112) for providing stimulus to the flexural resonator (112) and for receiving a response signal from the flexural resonator (112),
a protective layer (128) adapted to encapsulate a portion of the assembly so that components needing protection from harsh environments will be coated, and covering the flexural resonator (112) and the platform (116) while maintaining a free portion of the resonator exposed to the ambient such that the exposed sensing surface (114) can displace the fluid in contact therewith; and
a secondary component (130) positioned independently from the ASIC (126) on the platform (116), the secondary component (130) being selected from the group a temperature sensor, a field programmable gate array, a calibration unit, a conductive path, a resistor, a capacitor, an amplifier, a filter, and combinations of two or more thereof, the secondary component (130) being in optional electrical communication with the ASIC.

21. The package of claim 20, further comprising a housing spaced from the exposed sensing surface (114).

22. The package of claims 21 wherein the housing includes a plurality of walls (24) that substantially surround the flexural resonator (112) while maintaining exposure of the exposed sensing surface (114) to the fluid.

23. The package according to any of claims 20 - 22 wherein the ASIC (126) comprises a temperature sensor, or wherein the secondary component (130) comprises a temperature sensor.

24. The package according to any of claims 20 - 23 wherein the flexural resonator (112) is a tuning fork.

25. The package according to any of claim 20 - 24 wherein the protective layer (128) covers, partially or completely, the ASIC (126) or the secondary component (130).

26. The package according to any of claims 20 - 25 wherein the flexural resonator (112) is capable of operating at temperatures between -60 C and 300 C.

27. The package according to any of claims 20 - 25 wherein the flexural resonator (112) is capable of operating at temperatures between -40° C and 170° C.

28. The package according to any of claims 20 - 27 wherein the flexural resonator (112) on the platform (116) has a length or width smaller than 5 mm.

29. The package according to any of claims 20 - 27 wherein the flexural resonator (112) on the platform (116) has a length or width smaller than 1 mm.

30. The package according to any of claims 20 - 29 wherein the package has a volume of about less than 15 cm³.

31. The package according to any of claims 20 - 29 wherein the package has a volume of about less than about 10 cm³.

32. The package according to any of claims 20-31 wherein the package has a footprint of less than about 40 cm².

33. The package according to any of claims 20-31, wherein the package has a footprint of about less than about 20 cm².

34. The package according to any of claims 20 - 33 wherein the flexural resonator (112) is selected from tuning forks, cantilevers, bimorphs, or unimorphs, membrane resonators, or torsional resonators.

35. The package according to any of claims 20 - 34 wherein in the package is adapted for use in engines, automobiles, heavy machinery, military equipment, airplane parts, oil drilling, exploration and production well logging, oil refining, pipeline and quality control equipment, marine transportation, or sub-sea exploration and aerospace related equipment.

36. The package according to any of claims 20 - 35 further comprising a Faraday cage.

37. The package according to any of claims 20 - 36 wherein the package is adapted for use in an engine, a transmission, a transfer case, a differential, a brake system, a steering system, an antifreeze system, a heating and cooling system, and a washer system.

38. The package according to any of claims 20 - 37 wherein the package is adapted for use in lubricants, brake fluids, steering fluids, antifreeze fluids, refrigerant fluids, and washer fluids.

## Patentansprüche

1. Verfahren zum Verdichten eines Sensors, umfassend einen Biegeresonator, wobei das Verfahren folgendes umfasst:
Befestigen eines Biegeresonators (112) mit einer ungeschützten Abtastfläche (114) an einer Stellfläche (116), wobei zwischen der ungeschützten Abtastfläche (114) und der Stellfläche (116) ein derartiges räumliches Verhältnis geschaffen wird, dass die ungeschützte Abtastfläche (114) des Biegeresonators (112) eine damit in Kontakt stehende Flüssigkeit verschieben kann;
**gekennzeichnet durch**
das Befestigen einer anwendungsspezifischen integrierten Schaltung, ASIC (126), an der Stellfläche (116), die eine elektrische Kommunikation zwischen der ASIC (126) und dem Biegeresonator (112) zum Bereitstellen eines Impulses an den Biegeresonator (112) bereitstellt und zum Empfang eines Reaktionssignals vom Biegeresonator (112);
das Aufbringen einer Schutzschicht (128) zum Einkapseln eines Teils des Bausatzes, sodass die Bauteile, die Schutz vor rauen Umgebungen erfordern, beschichtet werden, und welche die Stellfläche (116) und den Biegeresonator (112) beschichten, während ein freier Teil des Resonators derart der Außenumgebung ausgesetzt wird, dass die ungeschützte Fläche (114) die damit verbundene Flüssigkeit verschieben kann;
das Befestigen eines Zweitbauteils (130), das unabhängig von der ASIC (126) auf der Stellfläche (116) positioniert ist, wobei das zweite Bauteil (130) ausgewählt ist aus einem Temperatursensor, einem feldprogrammierbaren Gate-Array, einer Kalibriereinrichtung, einer Leiterbahn, einem Kondensator, einem Verstärker, einem Filter und Kombinationen von zwei oder mehr dieser sowie als Option das Bereitstellen einer elektrischen Kommunikation zwischen der ASIC (126) und dem Zweitbauteil (130).

2. Verfahren nach Anspruch 1, wobei der Biegeresonator (112) eine Stimmgabel ist.

3. Verfahren nach Anspruch 1 oder 2, wobei die Schutzschicht (128) selektiv durch Sprühen, Aufpinseln, Formen, Laminieren oder durch Kombinationen davon aufgetragen wird.

4. Verfahren nach einem der Ansprüche 1 - 3, ferner umfassend das Blockieren der ungeschützten Abtastfläche (114) mit einer abnehmbaren Schutzbarriere (350) vor dem Auftragen der Schutzschicht (128).

5. Verfahren nach einem der Ansprüche 1 - 4, wobei die abnehmbare Schutzbarriere (350) eine wieder verwendbare oder Einweg-Barriere ist.

6. Verfahren nach Anspruch 5, wobei die abnehmbare Schutzbarriere (350) eine Einweg-Barriere ist, die ein Polymer, eine Stärke, ein Wachs, Salz oder ein anderes lösbares Kristall, ein Metall mit niedrigem Schmelzpunkt, ein Fotoresist oder anderes Opfermetall ist.

7. Verfahren nach Anspruch 5, wobei die abnehmbare Schutzbarriere (350) eine wieder verwendbare Barriere ist, die ein relativ weiches Material umfasst, das bei Kontakt mit dem Biegeresonator diesen nicht plastisch verformt.

8. Verfahren nach einem der Ansprüche 1 - 7, ferner umfassend das wenigstens teileweise Schützen des Biegeresonators (112) vor der Außenumgebung oder vor betrieblichen Zuständen während der Verwendung eines Gehäuses.

9. Verfahren nach einem der Ansprüche 1 - 8, ferner umfassend den Betrieb eines Biegeresonators (112) bei Temperaturen zwischen etwa 60°C und etwa 300°C.

10. Verfahren nach einem der Ansprüche 1 - 8, ferner umfassend den Betrieb des Biegeresonators (112) bei Temperaturen zwischen etwa 40°C und etwa 170°C.

11. Verfahren nach einem der Ansprüche 1 - 10, wobei der an der Stellfläche (116) befestigte Biegeresonator (112) eine Länge oder Breite von weniger als etwa 5 mm hat.

12. Verfahren nach einem der Ansprüche 1 - 10, wobei der an der Stellfläche (116) befestigte Biegeresonator (116) eine Länge oder Breite von weniger als etwa 1 mm hat.

13. Verfahren nach einem der Ansprüche 1 - 12, wobei die Baugruppe ein Volumen von weniger als etwa 15 cm³ hat.

14. Verfahren nach einem der Ansprüche 1 -12, wobei die Baugruppe ein Volumen von weniger als etwa 10 cm³ hat.

15. Verfahren nach einem der Ansprüche 1 - 14, wobei die Baugruppe eine Stellfläche von weniger als etwa 40 cm² hat.

16. Verfahren nach einem der Ansprüche 1 -14, wobei die Baugruppe eine Stellfläche von weniger als etwa 20 cm² hat.

17. Verfahren nach einem der Ansprüche 1 - 16, ferner umfassend wenigstens teilerhaltende elektrische Merkmale des Biegeresonators (112) durch die Verwendung eines Faradayschen Käfigs hat.

18. Verfahren nach einem der Ansprüche 1 - 17, ferner umfassend das Platzieren der Baugruppe in einen Motor, ein Getriebe, einen Versetzungskäfig, ein Differenzial, ein Bremssystem, ein Lenksystem, ein Frostschutzsystem, ein Heiz- und Kühlungssystem, eine Waschanlage oder Kombinationen davon.

19. Verfahren nach einem der Ansprüche 1 - 18, ferner umfassend das Platzieren der Baugruppe in ein Schmiermittel, eine Bremsflüssigkeit, eine Lenkflüssigkeit, ein Frostschutzmittel, ein Kältemittel, ein Waschwasser oder Kombinationen davon.

20. Baugruppe zum Schutz eines Sensors, umfassend einen Biegeresonator (112), wobei die Baugruppe folgendes umfasst:
einen Biegeresonator (112) auf einer Stellfläche (116), wobei der Biegeresonator (112) eine oder mehrere ungeschützte Flächen (114) in einem räumlichen Verhältnis zur Stellfläche (116) aufweist, sodass die ungeschützte Abtastfläche (114) eine in Kontakt mit derselben befindliche Flüssigkeit bewegen kann, um eine oder mehrere Merkmale der Flüssigkeit festzustellen,
**gekennzeichnet durch**
eine auf der Stellfläche (116) befindliche anwendungsspezifische integrierte Schaltung, ASIC (126), wobei die ASIC (126) in elektrischer Kommunikation zum Biegeresonator (112) steht, um einen Impuls an den Biegeresonator (112) bereitzustellen und ein Antwortsignal vom Biegeresonator (112) zu empfangen,
eine Schutzschicht (128), die derart angepasst ist, um einen Teil des Bausatzes derart einzukapseln, dass die Bauteile, die Schutz vor rauen Umgebungen erfordern, beschichtet werden, und die Stellfläche (116) und den Biegeresonator (112) beschichtet, während ein freier Teil des Resonators derart der Außenumgebung ausgesetzt wird, dass die ungeschützte Abtastfläche (114) die damit in Kontakt stehende Flüssigkeit verschieben kann und
ein Zweitbauteil (130), das unabhängig von der ASIC (126) auf der Stellfläche (116) positioniert ist, wobei das zweite Bauteil (130) ausgewählt ist aus einem Temperatursensor, einem feldprogrammierbaren Gate-Array, einer Kalibriereinrichtung, einer Leiterbahn, einem Kondensator, einem Verstärker, einem Filter und Kombinationen von zwei oder mehr dieser, wobei das Zweitbauteil (130) wahlweise in elektrischer Kommunikation zur ASIC (126) steht.

21. Baugruppe nach Anspruch 20, ferner umfassend ein Gehäuse, das von der ungeschützten Abtastfläche (114) beabstandet ist.

22. Baugruppe nach Anspruch 21, wobei das Gehäuse eine Mehrzahl von Wänden (24) enthält, die den Biegeresonator (112) im Wesentlichen umgeben, während die ungeschützte Abtastfläche (114) weiterhin der Flüssigkeit ausgesetzt ist.

23. Baugruppe nach einem der Ansprüche 20 - 22, wobei die ASIC (126) einen Temperatursensor umfasst, oder wobei das Zweitbauteil (130) einen Temperatursensor umfasst.

24. Baugruppe nach einem der Ansprüche 20 - 23, wobei der Biegeresonator (112) eine Stimmgabel ist.

25. Baugruppe nach einem der Ansprüche 20 - 24, wobei die Schutzschicht (128) die ASIC (126) oder das Zweitbauteil (130) entweder teilweise oder vollständig abdeckt.

26. Baugruppe nach einem der Ansprüche 20 - 25, wobei der Biegeresonator (112) bei Temperaturen zwischen -60°C und 300°C betrieben werden kann.

27. Baugruppe nach einem der Ansprüche 20 - 25, wobei der Biegeresonator (112) bei Temperaturen zwischen -40°C und 170°C betrieben werden kann.

28. Baugruppe nach einem der Ansprüche 20 - 27, wobei der Biegeresonator (112) auf der Stellfläche (116) eine Länge oder eine Breite von weniger als 5 mm hat.

29. Baugruppe nach einem der Ansprüche 20 - 27, wobei der Biegeresonator (112) auf der Stellfläche (116) eine Länge oder eine Breite von weniger als 1 mm hat.

30. Baugruppe nach einem der Ansprüche 20 - 29, wobei die Baugruppe ein Volumen von weniger als etwa 15 cm³ hat.

31. Baugruppe nach einem der Ansprüche 20 - 31, wobei die Baugruppe ein Volumen von weniger als etwa 10 cm³ hat.

32. Baugruppe nach einem der Ansprüche 20 - 31, wobei die Baugruppe eine Stellfläche von weniger als etwa 40 cm² hat.

33. Baugruppe nach einem der Ansprüche 20 - 31, wobei die Baugruppe eine Stellfläche von weniger als etwa 20 cm² hat.

34. Baugruppe nach einem der Ansprüche 20 - 33, wobei der Biegeresonator (112) ausgewählt ist aus Gabeln, Kragträgern, Bimorphen, Membranresonatoren oder Torsionsresonatoren.

35. Baugruppe nach einem der Ansprüche 20 - 34, wobei die Baugruppe zur Verwendung in Motoren, Kraftfahrzeugen, Schwermaschinen, Militärmaschinen, Flugzeugteilen, bei der Ölbohrung, der Erkundungs- und Produktionsbrunnenerfassung, der Ölraffinerie, in Fernleitungs- und Qualitätskontrollmaschinen, beim Seetransport oder Maschinen für die Unterwasserforschung und die Luft- und Raumfahrt.

36. Baugruppe nach einem der Ansprüche 20 - 35, ferner umfassend einen Faradayschen Käfig.

37. Baugruppe nach einem der Ansprüche 20 - 36, wobei die Baugruppe zur Verwendung in einem Motor, einem Getriebe, einem Versetzungskäfig, einem Differenzial, einem Bremssystem, einem Lenksystem, einem Frostschutzsystem, einem Heiz- und Kühlungssystem und einer Waschanlage angepasst ist.

38. Baugruppe nach einem der Ansprüche 20 - 37, wobei die Baugruppe zur Verwendung in Schmiermitteln, Bremsflüssigkeiten, Lenkflüssigkeiten, Frostschutzmitteln, Kältemitteln und Waschwasser angepasst ist.

## Revendications

1. Procédé pour mettre sous boîtier un capteur comprenant un résonateur à flexion, le procédé comprenant les étapes consistant à :
fixer un résonateur à flexion (112), ayant une surface de détection exposée (114), à une plate-forme (116), où une relation espacée est créée entre la surface de détection exposée (114) et la plate-forme (116), de sorte que la surface de détection exposée (114) du résonateur à flexion (112) puisse déplacer un fluide en contact avec elle ;
**caractérisé par** les étapes consistant à :
fixer un circuit intégré à application spécifique, CIAS (126), à la plate-forme (116), procurant une communication électrique entre le CIAS (126) et le résonateur à flexion (112) pour délivrer un stimulus au résonateur à flexion (112) et pour recevoir un signal de réponse à partir du résonateur à flexion (112) ;
appliquer une couche de protection (128) pour encapsuler une partie de l'assemblage de sorte que des composants requerrant une protection vis-à-vis d'environnements difficiles soient revêtus, couvrir la plate-forme (116) et le résonateur à flexion (112) tout en maintenant une partie libre du résonateur exposée au milieu ambiant de telle manière que la surface de détection exposée (114) peut déplacer le fluide en contact avec elle ;
fixer un composant secondaire (130) positionné indépendamment du CIAS (126) sur la plate-forme (116), le composant secondaire (130) étant sélectionné parmi un détecteur de température, un réseau prédiffusé programmable par l'utilisateur, une unité d'étalonnage, un conducteur, une résistance, un condensateur, un amplificateur, un filtre, et des combinaisons de deux, ou plus, de ces composants et, facultativement, procurer une communication électrique entre le CIAS (126) et le composant secondaire (130).

2. Procédé selon la revendication 1, dans lequel le résonateur à flexion (112) est un diapason.

3. Procédé selon la revendication 1 ou la revendication 2, dans lequel la couche de protection (128) est appliquée sélectivement par pulvérisation, brossage, moulage, stratification ou toute combinaison de ces procédés.

4. Procédé selon l'une quelconque des revendications 1 à 3, comprenant en outre de bloquer la surface de détection exposée (114) avec une barrière protectrice amovible (350) avant d'appliquer la couche de protection (128).

5. Procédé selon l'une quelconque des revendications 1 à 4, dans lequel la barrière de protection amovible (350) est une barrière réutilisable ou jetable.

6. Procédé selon la revendication 5, dans lequel la couche de protection amovible (350) est une barrière jetable qui comprend un polymère, de l'amidon, de la cire, du sel ou autre cristal soluble, un métal à point de fusion bas, un matériau photosensible, ou autre matériau sacrificiel.

7. Procédé selon la revendication 5, dans lequel la barrière de protection amovible (350) est une barrière réutilisable qui comprend un matériau relativement mou qui ne déformera pas plastiquement le résonateur à flexion s'il entre en contact avec le résonateur à flexion.

8. Procédé selon l'une quelconque des revendications 1 à 7, comprenant en outre de protéger au moins partiellement le résonateur à flexion (112) de l'environnement ambiant ou des conditions de fonctionnement via l'utilisation d'un boîtier.

9. Procédé selon l'une quelconque des revendications 1 à 8, comprenant en outre de faire fonctionner le résonateur à flexion (112) à des températures comprises entre environ -60 °C et environ 300 °C.

10. Procédé selon l'une quelconque des revendications 1 à 8, comprenant en outre de faire fonctionner le résonateur à flexion (112) à des températures comprises entre environ -40 °C et environ 170 °C.

11. Procédé selon l'une quelconque des revendications 1 à 10, dans lequel le résonateur à flexion (112) fixé à la plate-forme (116) a une longueur, ou une largeur, inférieure à environ 5 mm.

12. Procédé selon l'une quelconque des revendications 1 à 10, dans lequel le résonateur à flexion (112) fixé à la plate-forme (116) a une longueur, ou une largeur, inférieure à environ 1 mm.

13. Procédé selon l'une quelconque des revendications 1 à 12, dans lequel le boîtier a un volume d'environ moins de 15 cm³.

14. Procédé selon l'une quelconque des revendications 1 à 12, dans lequel le boîtier a un volume d'environ moins de 10 cm³.

15. Procédé selon l'une quelconque des revendications 1 à 14, dans lequel le boîtier a un encombrement d'environ moins de 40 cm².

16. Procédé selon l'une quelconque des revendications 1 à 14, dans lequel le boîtier a un encombrement d'environ moins de 20 cm² .

17. Procédé selon l'une quelconque des revendications 1 à 16, comprenant en outre de préserver au moins partiellement les caractéristiques électriques du résonateur à flexion (112) via l'utilisation d'une cage de Faraday.

18. Procédé selon l'une quelconque des revendications 1 à 17, comprenant en outre de placer le boîtier dans un moteur, une transmission, une boîte de transfert, un différentiel, un système de freinage, un système de direction, un système antigel, un système de chauffage et de refroidissement, un système de lavage ou des combinaisons de ceux-ci.

19. Procédé selon l'une quelconque des revendications 1 à 18, comprenant en outre de placer le boîtier dans un lubrifiant, un liquide de frein, un liquide de direction, un liquide antigel, un liquide réfrigérant, un liquide de nettoyage, ou des combinaisons de ceux-ci.

20. Boîtier pour protéger un détecteur comprenant un résonateur à flexion (112), le boîtier comprenant :
un résonateur à flexion (112) sur une plate-forme (116), le résonateur à flexion (112) ayant une ou plusieurs surfaces de détection exposées (114) en relation espacée vis-à-vis de la plate-forme (116), de sorte que la surface de détection exposée (114) peut déplacer un fluide en contact avec elle pour déterminer une ou plusieurs des caractéristiques du fluide,
**caractérisé par** :
un circuit intégré à application spécifique, CIAS (126), sur la plate-forme (116), le CIAS (126) étant en communication électrique avec le résonateur à flexion (112) pour délivrer un stimulus au résonateur à flexion (112) et pour recevoir un signal de réponse à partir du résonateur à flexion (112) ;
une couche de protection (128) adaptée pour encapsuler une partie de l'assemblage de sorte que des composants requerrant une protection vis-à-vis d'environnements difficiles soient revêtus, et couvrir le résonateur à flexion (112) et la plate-forme (116) tout en maintenant une partie libre du résonateur exposée au milieu ambiant de telle manière que la surface de détection exposée (114) puisse déplacer le fluide en contact avec elle ; et
un composant secondaire (130) positionné indépendamment du CIAS (126) sur la plate-forme (116), le composant secondaire (130) étant sélectionné dans le groupe comprenant un détecteur de température, un réseau prédiffusé programmable par l'utilisateur, une unité d'étalonnage, un conducteur, une résistance, un condensateur, un amplificateur, un filtre, et des combinaisons de deux ou plus de ces composants, le composant secondaire (130) étant en communication électrique facultative avec le CIAS.

21. Boîtier selon la revendication 20, comprenant en outre un logement espacé de la surface de détection exposée (114) .

22. Boîtier selon la revendication 21, dans lequel le logement comprend une pluralité de parois (24) qui entourent sensiblement le résonateur à flexion (112), tout en maintenant l'exposition de la surface de détection exposée (114) au fluide.

23. Boîtier selon l'une quelconque des revendications 20 à 22, dans lequel le CIAS (126) comprend un détecteur de température, ou dans lequel le composant secondaire (130) comprend un détecteur de température.

24. Boîtier selon l'une quelconque des revendications 20 à 23, dans lequel le résonateur à flexion (112) est un diapason.

25. Boîtier selon l'une quelconque des revendications 20 à 24, dans lequel la couche de protection (128) recouvre, partiellement ou complètement, le CIAS (126) ou le composant secondaire (130).

26. Boîtier selon l'une quelconque des revendications 20 à 25, dans lequel le résonateur à flexion (112) est capable de fonctionner à des températures comprises entre -60 °C et 300 °C.

27. Boîtier selon l'une quelconque des revendications 20 à 25, dans lequel le résonateur à flexion (112) est capable de fonctionner à des températures comprises entre -40 °C et 170 °C.

28. Boîtier selon l'une quelconque des revendications 20 à 27, dans lequel le résonateur à flexion (112) sur la plate-forme (116) a une longueur, ou une largeur, inférieure à 5 mm.

29. Boîtier selon l'une quelconque des revendications 20 à 27, dans lequel le résonateur à flexion (112) sur la plate-forme (116) a une longueur, ou une largeur, inférieure à 1 mm.

30. Boîtier selon l'une quelconque des revendications 20 à 29, dans lequel le boîtier a un volume d'environ moins de 15 cm³.

31. Boîtier selon l'une quelconque des revendications 20 à 29, dans lequel le boîtier a un volume d'environ moins de 10 cm³.

32. Boîtier selon l'une quelconque des revendications 20 à 31, dans lequel le boîtier a un encombrement d'environ moins de 40 cm².

33. Boîtier selon l'une quelconque des revendications 20 à 31, dans lequel le boîtier a un encombrement d'environ moins de 20 cm².

34. Boîtier selon l'une quelconque des revendications 20 à 33, dans lequel le résonateur à flexion (112) est sélectionné parmi des diapasons, des cantilevers, des dispositifs bimorphes ou uniphormes, des résonateurs à membrane ou des résonateurs à torsion.

35. Boîtier selon l'une quelconque des revendications 20 à 34, où le boîtier est adapté pour être utilisé dans des moteurs, des automobiles, des machines lourdes, des équipements militaires, des pièces d'avion, des forages pétroliers, des dispositifs de diagraphie de sondage d'exploration et de production, des équipements de raffinage de pétrole, de pipeline et de contrôle de qualité, des équipements de transport maritime, d'exploration sous-marine et aérospatiaux.

36. Boîtier selon l'une quelconque des revendications 20 à 35, comprenant en outre une cage de Faraday.

37. Boîtier selon l'une quelconque des revendications 20 à 36, où le boîtier est adapté pour être utilisé dans un moteur, une transmission, une boîte de transfert, un différentiel, un système de freinage, un système de direction, un système antigel, un système de chauffage et de refroidissement, et un système de lavage.

38. Boîtier selon l'une quelconque des revendications 20 à 37, où le boîtier est adapté pour être utilisé dans des lubrifiants, des liquides de frein, des liquides de direction, des liquides antigels, des liquides réfrigérants et des liquides de nettoyage.
